# EUROPEAN PATENT SPECIFICATION

(11) **EP 2 735 474 B1**
(45) Date of publication and mention of the grant of the patent: **14.11.2018**
(21) Application number: 12814448.2
(22) Date of filing: 21.06.2012
(51) Int. Cl.: B60N 2/28

(54) **CHILD SEAT**
KINDERSITZ
SIÈGE D'ENFANT

(30) Priority: 19.07.2011 JP 2011158330
(43) Date of publication of application: 28.05.2014
(73) Proprietor: Car Mate Mfg. Co., Ltd., Toshima-ku Tokyo 171-0051 (JP)
(72) Inventor: NAKATA, Ryo, Tokyo 171-0051 (JP); YOSHIDA, Koumei, Tokyo 171-0051 (JP); UCHIUMI, Taketomo, Tokyo 171-0051 (JP); KITAHARA, Kazuhiro, Tokyo 171-0051 (JP); ASAKURA, Maiko, Tokyo 171-0051 (JP)
(74) Representative: Grünecker Patent- und Rechtsanwälte PartG mbB
(86) International application number: PCT/JP2012/004018
(87) International publication number: WO 2013/011630

(56) References cited:
- EP-A1- 1 970 247
- JP-A- 2001 122 004
- JP-A- 2001 180 346
- JP-A- 2001 206 117
- JP-A- 2008 296 693
- JP-B2- 4 439 647

## Description

### Technical Field

The present invention relates particularly to a child seat having a fixing structure of an ISO-FIX system. More particularly, the present invention relates to a child seat in which a lock arm for performing coupling corresponding to the ISO-FIX system can protrude and retract.

### Background Art

A conventional child seat of the ISO-FIX system is attached to a seat 1 that includes a seat surface 2 of the seat 1 of a vehicle, a seat back 3 which is provided to stand upward from the back portion of the seat surface 2 and an attachment reception portion 4 which is provided in the vicinity of a connection part between the seat surface 2 and the seat back 3. In the child seat of Japanese Unexamined Patent Application Publication No. 2001-180347, as shown in Figs. 18 and 19, a seat member 801 that has a seat surface part used for a child to sit on and a part of the seat 1 of the vehicle that makes contact with the seat surface 2 are provided, a base member 802 to which the seat member 801 is removably attached is provided, a pair of lock arms 803 that protrude backward are provided in a position on the back side of the base member 802 and lock portions 804 that can individually engage with the attachment reception portion 4 are provided at the top ends of the lock arms 803.

In each of the lock portions 804, a hook 805 that is rotatably supported with a shaft whose axial direction is a left/right direction is provided. The hook 805 receives a force applied by a link, a lock means is connected to the link and each lock means is provided with a cancellation lever 806 that can be operated from the upper side of the base member 802. The lock means makes contact with the attachment reception portion 4 when the hook 805 is in an open position, the hook 805 is allowed to rotate to a lock position of the hook 805 with the force applied to the hook 805 and the hook 805 is fixed to the lock position. Then, while an operation of pulling up the cancellation lever 806 is being operated, the fixed state of the hook 805 is cancelled, and the hook 805 is allowed to rotate from the lock position to the open position.

Here, the base member 802 includes a movable plate 807 that is moved only backward by a latch mechanism, and makes the seat member 801 engage with the movable plate 807 to attach it. Then, the seat member 801 is pushed backward together with the movable plate 807, and with the seat member 801 pressed onto the seat back 3 of the seat 1, the child seat is stably fixed without being shacked. The child seat having the configuration described above is known.

### Related Art Document

### Patent Document

Patent document 1: Japanese Unexamined Patent Application Publication No. 2001-180347

### Disclosure of the Invention

### Problems to be Solved by the Invention

In patent document 1 described above, the seat member 801 is removed from the base member 802, and thus it is possible to operate the cancellation lever 806 on the upper surface of the base member 802, and the lock portions 804 are removed from the attachment reception portion 4 by the operation of the cancellation lever 806. Hence, it is impossible to utilize it as a child seat in which the seat member 801 is not separated from the base member 802. Furthermore, when the child seat is used, the lock arms 803 can be moved in the direction of retraction with respect to the base member 802. Hence, when another vehicle hits the vehicle from behind, the seat member 801 is moved in a direction approaching the attachment reception portion 4 of the vehicle by the contraction of the cushion of the seat back 3 of the seat 1 in the vehicle. Disadvantageously, this movement limitation produces a great forward acceleration in a short period of time.

In the child seat of the ISO-FIX system in patent document 1 described above, a means for cancelling the engagement of the lock portions 804 is performed in a first step in which the seat member 801 is removed from the base member 802 and in a second step in which the engagement of the lock portions 804 is removed by the operation of the cancellation lever 806. This prevents the removal of the child seat from the vehicle resulting from an operation by the child restricted in the child seat or an erroneous operation by an operator other than the seated child. However, since it is necessary to perform the operation of removing the seat member 801 from the base member 802 each time the child seat is attached to or removed from the vehicle, it is necessary to adopt a structure where the seat member 801 can be removed from the base member 802.

Furthermore, since it is necessary to reliably couple the base member 802 and the seat member 801 together at the time of use or collision, the structure is complicated, the product cost is increased and the necessary strength of the child seat itself is increased, with the result that the increase in weight degrades the handleability. Disadvantageously, the operation of removal from and attachment to the vehicle is complicated, and at the same time, with the base member 802 removed, grease or the like applied to the coupling portion stains the seat or the like of the vehicle.

Furthermore, in the child seat of the ISO-FIX system in patent document 1 described above, when the seat member 801 is pushed backward with respect to the base member 802 before the lock portions 804 are engaged with the attachment reception portion 4, the latch mechanism is operated to make the seat member 801 move backward. Hence, disadvantageously, the lock portions 804 are prevented from reaching the attachment reception portion 4, and thus it is impossible to lock the lock portions 804 with the attachment reception portion 4.

As another existing child seat of the ISO-FIX system, a child seat is known in which the lock arms 803 protruding to the back side of the base member 802 are formed, the lock portions 804 that are removable with respect to the attachment reception portion of the vehicle are provided at the top ends of the lock arms 803 and the lock arms 803 are moved forward with respect to the base member 802 by a latch mechanism. However, in these existing child seats, when the lock portions 804 are engaged with the attachment reception portion 4 of the vehicle, if the lock portions 804 make contact with the seat back 3 of the vehicle or its periphery, the lock arms 803 are moved in the direction of the base member 802, with the result that the lock portions 804 are disadvantageously prevented from reaching the lock portions 804.

From EP1970247 the following type of a child seat is known: A child seat which includes a seat surface, a seat back provided to stand upward from a back portion of the seat surface and an attachment reception portion provided in a vicinity of a connection part between the seat surface and the seat back, which is attached to a seat of a vehicle and on which a child sits, the child seat comprising:a child seat main body;a pair of left and right lock arms which protrude backward from a lower portion of a back of the child seat main body; and a lock portion which is arranged at a top end of the lock and,wherein with the child seat fitted to the vehicle, the lock portions of the pair of left and right lock arms are engaged with the attachment reception portions, respectively,the child seat further comprises: a lock cancellation mechanism which cancels the engagement of the lock portion with the attachment reception portion; a control mechanism which controls an extension and contraction operation of the lock arm on the child seat main body; and an operation portion which operates the control mechanism and an extension and contraction position of the lock arm includes: an extension and contraction control range which is a range of use in a state where the child seat is fitted to the vehicle; and an attachment and removal control range which is in a position where the lock arm extends from the child seat main body as compared with the extension and contraction control range set for attaching to and removing from the lock portion with respect to the attachment reception portion of the vehicle, wherein the lock cancellation mechanism can be operated only when the extension and contraction position of the lock arm is in the attachment and removal control range.

An object of the present invention is to provide a child seat which solves the problems related to the known technology, in which it is not necessary to remove a seat surface part where a child sits when the child seat is attached to or removed from a vehicle, which can prevent the child seat from being removed from the vehicle resulting from an operation by the child restricted in the child seat or an erroneous operation by an operator, which further prevents the lock arms described above from being moved in the direction of retraction when lock portions are locked to the attachment reception portion of the vehicle and which can reliably lock the lock portions to the attachment reception portion of the vehicle.

### Means for Solving the Problem

According to the present invention, there is provided a child seat which includes a seat surface, a seat back provided to stand upward from a back portion of the seat surface and an attachment reception portion provided in a vicinity of a connection part between the seat surface and the seat back, which is attached to a seat of a vehicle and on which a child sits, the child seat including: a child seat main body; a pair of left and right lock arms which protrude backward from a lower portion of a back of the child seat main body; and a lock portion which is arranged at a top end of the lock arm, where with the child seat fitted to the vehicle, the lock portions of the pair of left and right lock arms are engaged to the attachment reception portions, respectively, the child seat further includes: a lock cancellation mechanism which cancels the engagement of the lock portion with the attachment reception portion; a control mechanism which controls an extension and contraction operation of the lock arm on
the child seat main body; and an operation portion which operates the control mechanism and an extension and contraction position of the lock arm includes: an extension and contraction control range which is a range of use in a state where the child seat is fitted to the vehicle; and an attachment and removal control range which is in a position where the lock arm extends from the child seat main body as compared with the extension and contraction control range set for attaching to and removing from the lock portion with respect to the attachment reception portion of the vehicle.

Furthermore, the lock cancellation mechanism can be operated only when the extension and contraction position of the lock arm is in the attachment and removal control range.

Moreover, a means which cancels the engagement of the lock portion with the attachment reception portion from the state where the child seat is fitted to the vehicle is configured such that the means can performed with a plurality of operation means in a state where a seat surface part on which the child sits is not separated.

Furthermore, the means which cancels the engagement of the lock portion with the attachment reception portion from the state where the child seat is fitted to the vehicle includes: a first operation means which cancels, with an operation of the operation portion, the control of the extension and contraction operation of the lock arm by the control mechanism; and a second operation means which moves the child seat main body forward in a state where the operation of the operation portion is used to cancel the control of the extension and contraction operation of the lock arm such that the extension and contraction position of the lock arm with respect to the child seat main body is moved from the extension and contraction control range to the attachment and removal control range, and with the extension and contraction position of the lock arm in the attachment and removal control range, the operation portion is operated such that the lock cancellation mechanism is operated.

Moreover, preferably, the child seat includes a contraction lock mechanism which is operated as the engagement of the lock portion with the attachment reception portion is cancelled, the contraction lock mechanism prevents, when the contraction lock mechanism is operated, a movement of the lock arm to the extension and contraction control range with respect to the child seat main body and the contraction lock mechanism is cancelled by the engagement of the lock portion with the attachment reception portion.

### Effects of the Invention

The child seat of the present invention has the following effects: it is not necessary to remove the seat surface part where the child sits when the child seat is attached to or removed from the vehicle, it is possible to prevent the child seat from being removed from the vehicle resulting from an operation by the child restricted in the child seat or an erroneous operation by an operator, it is possible to further prevent the lock arms described above from being moved in the direction of retraction when lock portions are locked to the attachment reception portion of the vehicle and it is possible to reliably lock the lock portions to the attachment reception portion of the vehicle.

### Brief Description of Drawings

[Fig. 1] A side view showing a form in which the child seat of the present invention is fitted to the seat of a vehicle;
[Fig. 2] A main part perspective view in a first embodiment of the present invention;
[Fig. 3] A reference horizontal cross-sectional view in which an operation portion of the first embodiment of the present invention is in a non-operated state;
[Fig. 4] A reference horizontal cross-sectional view in which the operation portion of the first embodiment of the present invention is in a first stage;
[Fig. 5] A reference horizontal cross-sectional view in which the operation portion of the first embodiment of the present invention is in the first stage;
[Fig. 6] A reference horizontal cross-sectional view in which the operation portion of the first embodiment of the present invention is in a second stage;
[Fig. 7] A reference vertical cross-sectional view in which the hook of the first embodiment of the present invention is in a non-locked position;
[Fig. 8] A reference vertical cross-sectional view in which the hook of the first embodiment of the present invention is in a locked position;
[Fig. 9] A reference horizontal cross-sectional view in which the lock arm of the first embodiment of the present invention is in an attachment and removal control range;
[Fig. 10] A main part perspective view in which the operation portion of the first embodiment of the present invention is in the non-operated state;
[Fig. 11] A main part perspective view in which the operation portion of the first embodiment of the present invention is in the first stage;
[Fig. 12] An enlarged side view of a contraction lock mechanism in a state where the lock portion of the lock arm of the present invention is in the non-locked position;
[Fig. 13] An enlarged cross-sectional view of the contraction lock mechanism in the state where the lock portion of the lock arm of the present invention is in the non-locked position;
[Fig. 14] An enlarged side view of the contraction lock mechanism in a state where the lock portion of the lock arm of the present invention is in the locked position;
[Fig. 15] An enlarged cross-sectional view of the contraction lock mechanism in the state where the lock portion of the lock arm of the present invention is in the locked position;
[Fig. 16] A reference horizontal cross-sectional view in which an operation portion of a second embodiment of the present invention is in a non-operated state;
[Fig. 17] A reference horizontal cross-sectional view in which the operation portion of the second embodiment of the present invention is in an operated state (in the middle of an operation);
[Fig. 18] A side view showing a form in which a child seat of a conventional technology is fitted to the seat of a vehicle; and

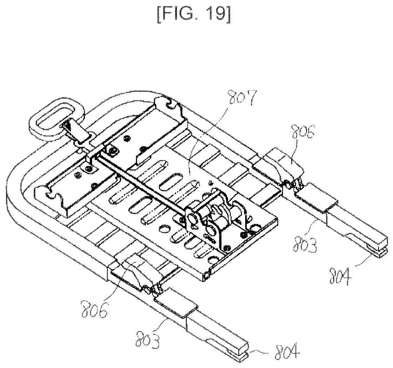

[Fig. 19] A main part perspective view in the child seat of the conventional technology.

### Best Mode for Carrying Out the Invention

### First embodiment

A first embodiment will be described below with reference to accompanying drawings.

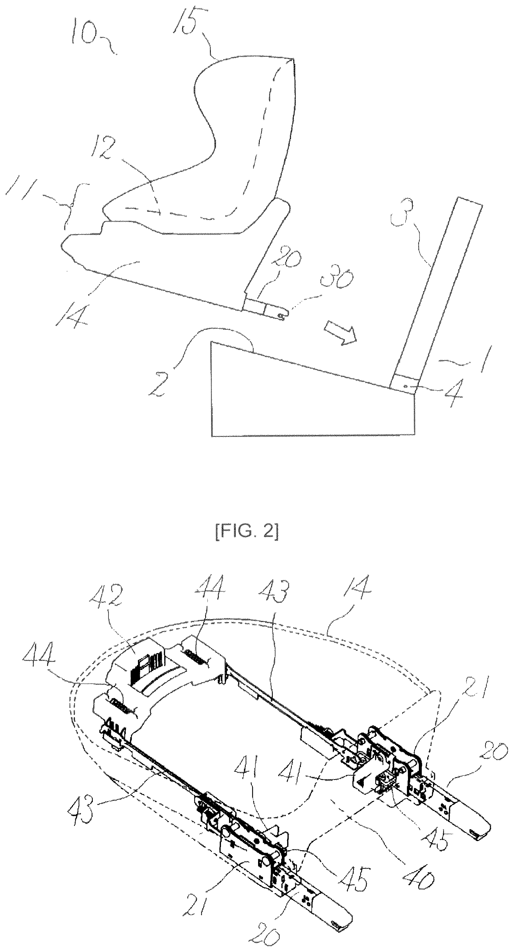

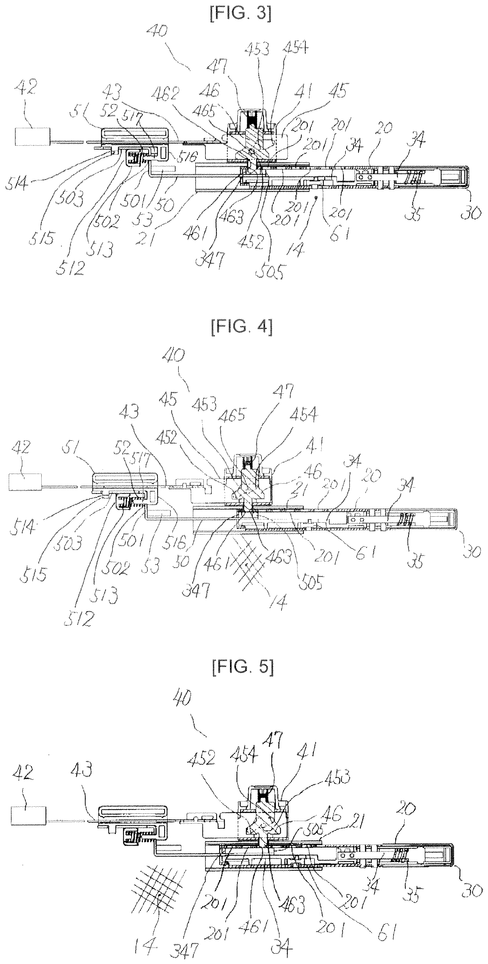

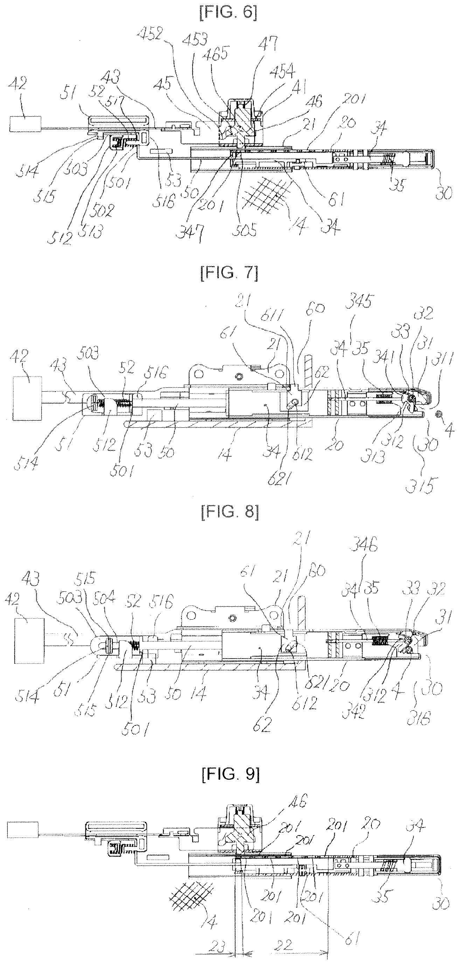

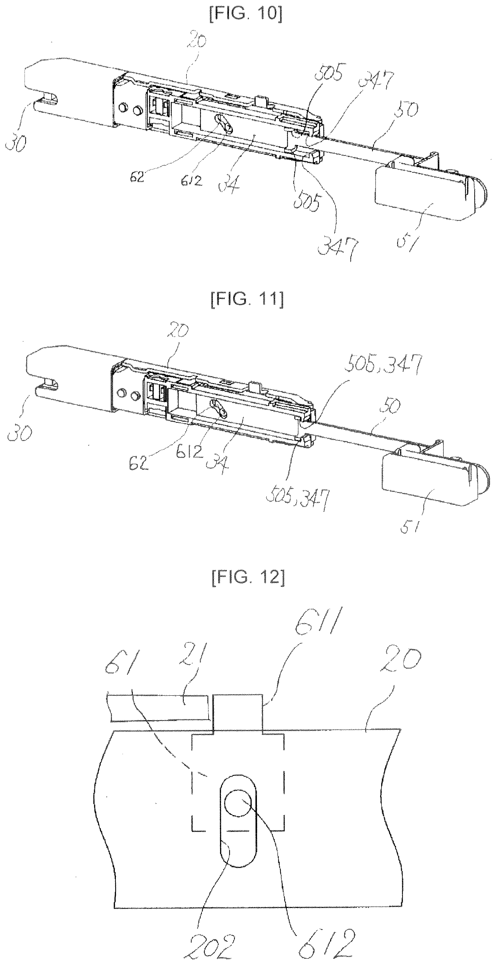

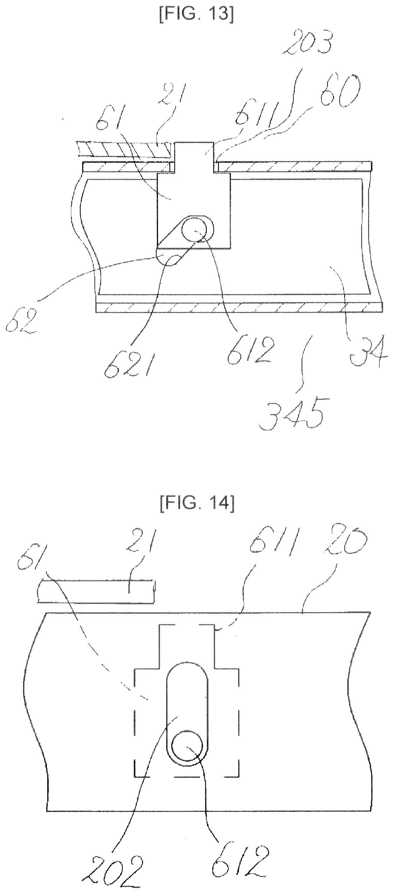

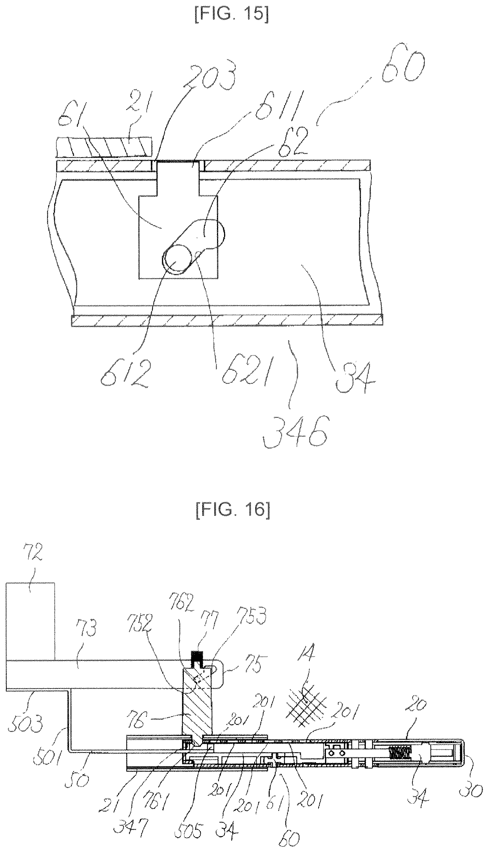

Fig. 1 is a side view showing a form in which the child seat of the present invention is fitted to the seat of a vehicle, Fig. 2 is a main part perspective view in the first embodiment of the present invention, Fig. 3 is a reference horizontal cross-sectional view in which an operation portion of the first embodiment of the present invention is in a non-operated state, Fig. 4 is a reference horizontal cross-sectional view in which the operation portion of the first embodiment of the present invention is in a first stage, Fig. 5 is a reference horizontal cross-sectional view in which the operation portion of the first embodiment of the present invention is in the first stage, Fig. 6 is a reference horizontal cross-sectional view in which the operation portion of the first embodiment of the present invention is in a second stage, Fig. 7 is a reference vertical cross-sectional view in which the hook of the first embodiment of the present invention is in a non-locked position, Fig. 8 is a reference vertical cross-sectional view in which the hook of the first embodiment of the present invention is in a locked position, Fig. 9 is a reference horizontal cross-sectional view in which the lock arm of the first embodiment of the present invention is in an attachment and removal control range, Fig. 10 is a main part perspective view in which the operation portion of the first embodiment of the present invention is in the non-operated state, Fig. 11 is a main part perspective view in which the operation portion of the first embodiment of the present invention is in the first stage, Fig. 12 is an enlarged side view of a contraction lock mechanism in a state where the lock portion of the lock arm of the present invention is in the non-locked position, Fig. 13 is an enlarged cross-sectional view of the contraction lock mechanism in the state where the lock portion of the lock arm of the present invention is in the non-locked position, Fig. 14 is an enlarged side view of the contraction lock mechanism in a state where the lock portion of the lock arm of the present invention is in the locked position, and Fig. 15 is an enlarged cross-sectional view of the contraction lock mechanism in the state where the lock portion of the lock arm of the present invention is in the locked position.

In the following description, a front/back direction and a left/right direction refer to a front/back direction and a left/right direction with respect to a person who sits on a vehicle seat where the child seat is placed.

As shown in Fig. 1, the seat 1 of the vehicle to which the child seat 10 of the present invention can be fitted includes a seat surface 2 and a seat back 3 provided to stand upward from the back portion of the seat surface. In the vicinity of a connection part between the seat surface 2 and the seat back 3, as a child seat coupling anchor of the ISO-FIX system, a pair of left and right attachment reception portions 4 are provided. The attachment reception portions 4 are arranged to cross, in the left/right direction, the vicinity of the connection part between the seat surface 2 and the seat back 3 and are attached to the seat 1.

The child seat 10 includes: a child seat main body 11 formed with a seat surface 12 on which the child sits, a seat member 15 having a restriction belt which restricts the child seated on the seat surface 12 and a base member 14 which is connected to the seat member 15 such that its bottom surface is in contact with the seat surface 2 of the seat 1; a pair of left and right lock arms 20 which protrude backward from the lower portion of the back of the base member 14; and lock portions 30 which are arranged at the top ends of the lock arms 20 so as to be able to engage with the attachment reception portions 4. The seat member 15 and the base member 14 may be integrally configured.

As shown in Fig. 2, the pair of left and right lock arms 20 are retained within the base member 14 so that they can be moved in the front/back direction by a pair of left and right arm guides 21 arranged in the positions of the bottom portion of the base member 14. Furthermore, within the base member 14, a control mechanism 40 that controls the extension and contraction operation of the pair of left and right lock arms 20 is arranged. The control mechanism 40 includes control mechanism main bodies 41 that are fixed to the pair of left and right arm guides 21, an operation portion 42 that operates the control mechanism 40, control mechanism link members 43 that are moved in the front/back direction by the operation of the operation portion 42, springs 44 that apply backward forces to the control mechanism link members 43 and stopper guides 45 that are connected to the positions of the top ends of the control mechanism link members 43.

As shown in Figs. 3 to 5, on the surface opposite to the control mechanism main body 41 of the lock arm 20, a plurality of opening portions 201 are formed apart in the front/back direction. The control mechanism main body 41 includes a stopper 46 which is configured such that the stopper 46 can move forward and backward with respect to the opening portions 201 (which may be recesses) of the lock arm 20. The stopper 46 receives a force that acts in the direction of the opening portions 201 and that is applied by a spring 47.

The stopper 46 includes: a top end lock portion 461 which is formed such that its front side position can substantially vertically make contact with and an inclination surface 463 in its back side position can make contact with the opening portion 201 of the lock arm 20; and a second lock portion 462 which is formed such that both its front side position and its back side position can substantially vertically make contact with the opening portion 201 of the lock arm 20.

Furthermore, the stopper 46 includes a guide portion 465 which is formed to protrude in a substantially vertical direction (an up/down direction) relative to the direction in which the stopper 46 moves forward and backward with respect to the opening portions 201. The guide portion 465 is configured so as to make contact with a guide surface formed in the stopper guide 45 connected to the top end position of the control mechanism link member 43.

The control mechanism link member 43 to which the backward force is applied by the springs 44 is configured so as to be moved forward by the operation of the operation portion 42. The operation of the operation portion 42 in the first embodiment consists of a non-operated state, an operated state up to the first stage and an operated state up to the second stage. The guide surface that makes contact with the guide portion 465 of the stopper 46 includes a non-operated guide surface 452 in a state where the stopper guide 45 is moved backward by the spring, a first movement guide surface 453 in a state where the stopper guide 45 is moved up to the first stage by the operation of the operation portion 42 and a second movement guide surface 454 in a state where the stopper guide 45 is moved up to the second stage by the operation of the operation portion 42.

In order to switch between the operated state of the operation portion 42 up to the first stage and the operated state up to the second stage, a movement position control lever (not shown) is provided in the operation portion 42. When the state is brought into the operated state in the first stage by the movement operation of the operation portion 42, the movement position control lever makes contact with part of the base member 14, and thus the movement of the operation portion 42 up to the second stage can be controlled. The state where the movement position control lever is in contact with the base member 14 is cancelled by the operation of the movement position control lever, and thus the operation portion 42 can be moved up to the second stage. The configuration in which the movement of the operation portion 42 up to the second stage is controlled by the operated state in the first stage resulting from the movement operation of the operation portion 42 is not limited to the present embodiment and it can be achieved by applying an existing technology. The control mechanism link member 43 may receive a forward force applied by the spring 44, and may be moved backward by the operation of the operation portion 42.

As shown in Fig. 3, when the guide surface with which the guide portion 465 of the stopper 46 makes contact is the non-operated guide surface 452 by the control mechanism 40, the distance over which the lock arm 20 protrudes to the opening portion 201 is the largest. The second lock portion 462 of the stopper 46 locks the opening portion 201 of the lock arm 20, and thus the lock arm 20 is prevented from being moved in the front/back direction with respect to the base member 14.

As shown in Fig. 4, when the guide surface with which the guide portion 465 of the stopper 46 makes contact is the first movement guide surface 453, the distance from the lock arm 20 is far as compared with the non-operated guide surface 452, and thus the position of the stopper 46 that protrudes to the opening portion 201 of the lock arm 20 is the position of the top end lock portion 461. In this way, the lock arm 20 is prevented from being moved in a backward direction (the direction of extension) with respect to the base member 14. However, the lock arm 20 is not prevented from being moved in a forward direction (the direction of contraction) with respect to the base member 14, and thus as shown in Fig. 5, the lock arm 20 can be moved in the forward direction (the direction of contraction). In this case, a latch structure is achieved in which the stopper 46 is repeatedly moved forward and backward with respect to the opening portion 201 by the inclination surface 463 of the stopper 46.

As shown in Fig. 5, when the guide surface with which the guide portion 465 of the stopper 46 makes contact is the second movement guide surface 454, the distance from the lock arm 20 is farther as compared with the first movement guide surface 453. Both front and back vertical surfaces of the stopper 46 do not lock the opening portion 201 of the lock arm 20, and thus the control mechanism 40 that controls the forward and backward movement of the lock arm 20 with respect to the base member 14 is cancelled.

When the inclination surfaces are formed at the front and back top end portions of the stopper 46 (not shown), and the guide surface with which the guide portion 465 of the stopper 46 makes contact is the second movement guide surface 454, the inclination surfaces formed at the front and back top end portions of the stopper 46 may make contact with the opening portion 201 of the lock arm 20. In that case, although the lock arm 20 can be moved in the front/back direction with respect to the base member 14, when the lock arm 20 is moved in the front/back direction, the stopper 46 repeats an forward and backward movement, with the result that it is possible to obtain stepwise feelings of operation at the time of the movement of the lock arm 20 in the front/back direction. In the present invention, the control mechanism 40 that controls the extension and contraction operation of the lock arm 20 is not limited to the present embodiment; the control mechanism of any existing extension and contraction operation can be utilized.

As shown in Figs. 7 and 8, the lock portion 30 arranged at the top end portion of the lock arm 20 in the child seat of the present invention includes a hook 31 where a reception port 311 capable of receiving the attachment reception portion 4 of the vehicle at one end. The hook 31 is rotated by a shaft portion 32 arranged between the left and right side walls of the lock arm 20, and is pivoted such that a non-locked position 315 in a state where the reception port 311 is open backward and a locked position 316 in a state where the reception port 311 is blocked by the lower surface of the lock arm 20 can be switched. A spring 33 arranged around the shaft portion 32 applies, to the hook 31, a force acting in the direction of the non-locked position 315.

Furthermore, the lock portion 30 includes a lock bar 34 arranged within the lock arm 20 in the front/back direction and a spring 35 that applies a backward force to the lock bar 34. The lock bar 34 has a first lock bar position 345 in which in a state where the hook 31 is in the non-locked position 315, a top end portion 341 at the back makes contact with the hook 31.

Furthermore, the lock bar 34 has a second lock bar position 346 in which when the hook 31 is rotated to the locked position, the upper surface 342 of the top end portion engages with a concave lock portion 312 formed in the hook 31 such that the hook 31 is prevented from being rotated in the direction of the non-locked position 315.

When the lock portion 30 arranged at the top end portion of the lock arm 20 and the attachment reception portion 4 are locked together, in a state where the attachment reception portion 4 is arranged within the reception port 311 of the hook 31, the base member 14 (the child seat main body 11) is moved backward by a force greater than the force applied by the spring 33. In this way, the hook 31 is rotated, and thus the concave lock portion 312 formed in the hook 31 is moved to the top end position of the lock bar 34. Consequently, the back top end portion 341 of the lock bar 34 that is moved backward by receiving the backward force applied by the spring 35 is moved within the concave lock portion 312 formed in the hook 31, the upper surface 342 of the top end portion of the lock bar 34 engages with the jaw portion 313 of the concave lock portion 312 and thus it is possible to maintain the state where the lock portion 30 and the attachment reception portion 4 are locked together.

In the present embodiment, as shown in Figs. 3 to 8, a pair of left and right lock cancellation link members 50 arranged in the position of the bottom portion of the base member 14 in the front/back direction are provided. The back part of the lock cancellation link member 50 is arranged within the lock arm 20. At the front portion, a bend arm portion 501 that is bent substantially vertically in the left/right direction and a top end portion 503 that is bent substantially vertically in the forward direction of the bend arm portion 501 are formed. A hole 502 is formed substantially in the center portion of the bend arm portion 501, and a long hole 504 extending in the front/back direction is formed in the top end portion 503. The front part of the lock cancellation link members 50 is connected through an adapter 51 to the control mechanism link members 43.

The adapter 51 includes a fixing portion to the control mechanism link member 43 in one position in the left/right direction, and further includes a means that retains a spring 52 for applying a backward force to the lock cancellation link member 50, a means that retains the lock cancellation link member 50 in a state where the adapter 51 can move in the front/back direction relatively with respect to the lock cancellation link members 50 and a movement means for moving forward the lock cancellation link members 50.

Here, the means that retains the spring 52 for applying the backward force to the lock cancellation link member 50 is formed with a first arm portion 512 that protrudes substantially in the center portion of the front and back in the other direction of the left/right direction and a spring reception portion 513 that is formed backward to the top end portion of the first arm portion 512. In the spring 52 whose front end portion is retained by the spring reception portion 513, its back end portion makes contact with the front surface of the bend arm portion 501 to apply the backward force to the lock cancellation link member 50.

The means that retains the lock cancellation link member 50 such that the lock cancellation link member 50 can be moved relatively in the front/back direction protrudes in the position of the front of the adapter 51 in the other direction of the left/right direction to penetrate the long hole 504 of the lock cancellation link members 50, and the means includes a second arm portion 514 in which a jaw portion 515 for preventing disconnection is formed at its end portion and a third arm portion 516 which protrudes in the position of the back of the adapter 51 in the other direction of the left/right direction and which further has a pin-shaped protrusion 517 extending forward from its top end portion. The pin-shaped protrusion 517 is arranged so as to penetrate the hole 502 of the lock cancellation link member 50, and its top end portion is arranged opposite to the spring reception portion 513 to have the function of preventing the spring 52 from being disconnected.

The front surface of the third arm portion 516 makes contact with the back surface of the bend arm portion 501, and thus the movement means for moving forward the lock cancellation link members 50 is performed.

In the back surface of the bend arm portion 501, its backward movement position is limited by a locating rib 53 formed to extend upward from the bottom surface of the base member 14, and the locating rib 53 is arranged such that in the state from the non-operated state of the operation portion 42 to the operated state up to the first stage, the back surface of the bend arm portion 501 hits the locating rib 53. In this way, in the state from the non-operated state of the operation portion 42 to the operated state up to the first stage, the front side surface of the third arm portion 516 and the back side of the bend arm portion 501 are separated, and thus the lock cancellation link member 50 is prevented from being moved in the front/back direction even when the operation portion 42 is operated. When the operation portion 42 is operated from the operated state up to the first stage to the second stage, the front surface of the third arm portion 516 makes contact with the back surface of the bend arm portion 501, and thus the lock cancellation link member 50 is moved in the forward direction.

In this configuration, the extension and contraction position of the lock arm 20 includes: an extension and contraction control range 22 which is displayed in Figs. 3 to 8, which is set as a range of use in a state where the child seat is fitted to the vehicle and in which the stopper 46 can lock a plurality of opening portions 201 in the lock arm 20; and an attachment and removal control range 23, as shown in Fig. 9, which is in a position where the lock arm 20 extends from the base member 14 as compared with the extension and contraction control range 22 set for attaching to and removing from the lock portion 30 with respect to the attachment reception portion 4 of the vehicle.

As shown in Figs. 10 and 11, at the back portion of the lock cancellation link member 50 and the front portion of the lock bar 34, engagement portions 505 and 347 are formed, respectively. When the lock arm 20 is in the attachment and removal control range 23, the movement operation is performed from the non-operated state of the operation portion 42 shown in Fig. 10 to the first stage of the operation portion 42 as shown in Fig. 11, and thus the lock cancellation link member 50 is moved in the forward direction with respect to the base member 14, the engagement portion 505 of the lock cancellation link member 50 and the engagement portion 347 of the lock bar 34 are brought into a state of contact and in that state, the lock bar 34 is prevented from being moved. Hence, as shown in Fig. 8, the lock bar 34 is kept in the first lock bar position 345. Furthermore, the movement operation is performed on the operation portion 42 up to the second stage, and thus as the engagement portion 505 formed in the back portion of the lock cancellation link member 50 is moved forward, the lock bar 34 including the engagement portion 347 formed in the front portion of the lock bar 34 is moved forward up to the second lock bar position 346 or is moved in the forward direction as compared with the second lock bar position 346. Thus, as shown in Fig. 7, the state of the engagement between the upper surface 342 of the top end portion of the lock bar 34 and the concave lock portion 312 of the hook 31 is canceled, the hook 31 of the lock portion 30 is rotated to the non-locked position 315 by a force applied by the spring 33 and the state of the locking of the lock portion 30 and the attachment reception portion 4 is cancelled.

When the lock arm 20 is in the extension and contraction control range 22, the movement operation is performed on the operation portion 42 up to the second stage. Thus, even when the lock cancellation link member 50 is moved in the forward direction with respect to the base member 14, the engagement portion 505 of the lock cancellation link member 50 and the engagement portion 347 of the lock bar 34 are not engaged and are kept separated. Hence, it is impossible to move the lock bar 34 forward, and thus it is impossible to cancel the state of the locking of the lock portion 30 and the attachment reception portion 4.

Therefore, when the engagement of the lock portion 30 with the attachment reception portion 4 is cancelled from the state where the child seat 10 is fitted to the vehicle, with the base member 14 in contact with the seat surface 2 of the seat 1 in the vehicle connected to the seat member 15 having a part of the seat surface 12 on which the child sits, as the first operation, the movement operation is performed on the operation portion 42 up to the second stage. This allows the movement of the lock arm 20 in the front/back direction with respect to the base member 14. Then, as the second operation, with the first operation maintained, the child seat main body 11 (the base member 14) is moved forward. Thus, the extension and contraction position of the lock arm 20 with respect to the base member 14 is moved up to the attachment and removal control range 23. Thus, the engagement portion 505 of the lock cancellation link member 50 and the engagement portion 347 of the lock bar 34 are engaged, and furthermore, the child seat main body 11 (the base member 14) is moved forward. Thus, the lock bar 34 is brought into the second lock bar position 346 where the lock bar 34 is moved forward, and the state of the engagement between the upper surface 342 of the top end portion of the lock bar 34 and the concave lock portion 312 of the hook 31 is cancelled. Thus, the hook 31 of the lock portion 30 is rotated to the non-locked position 315 by the force applied by the spring 33, and the state of the locking of the lock portion 30 and the attachment reception portion 4 is cancelled. In the child seat where the base member 14 and the seat member 15 can be separated, a configuration may be adopted in which with the seat member 15 separated from the base member 14, it is possible to perform an operation of cancelling the engagement of the lock portion 30 with the attachment reception portion 4.

In the present invention, as a means that cancels the engagement of the lock portion 30 with the attachment reception portion 4 from the state where the child seat 10 is fitted to the vehicle, as described above, unless a plurality of operations consisting of the first operation and the second operation are performed, it is impossible to remove the child seat 10 from the attachment reception portion 4 of the vehicle. Hence, it is possible to prevent the child seat 10 from being removed from the vehicle without the intension of a guardian resulting from an operation performed by the child restricted on the child seat 10.

Furthermore, the operation described above includes an operation of moving the child seat main body 11 (the base member 14) forward. Hence, with the child sitting on the child seat 10, the weight of the child increases the friction resistance between the bottom surface of the child seat 10 and the seat surface 2 of the seat 1 in the vehicle, and thus it becomes difficult to perform the operation. Consequently, it is possible to prevent the child seat 10 from being removed from the vehicle resulting from an erroneous operation performed by an operator other than the child sitting on the child seat 10.

Furthermore, as shown in Figs. 7, 8 and 12 to 15, the child seat 10 of the present invention includes a contraction lock mechanism 60 that is operated as the engagement of the lock portion 30 with the attachment reception portion 4 is cancelled. When the contraction lock mechanism 60 is operated, the contraction lock mechanism 60 prevents the movement of the lock arm 20 to the extension and contraction control range 22 with respect to the child seat main body 10. The contraction lock mechanism 60 is cancelled by the engagement of the lock portion 30 with the attachment reception portion 4. Hence, in the lock portion 30 of the lock arm 20, with the hook 31 in the non-locked position 315, the lock arm 20 is constantly in the attachment and removal control range 23.

The contraction lock mechanism 60 includes: a lock part 61 having a protrusion portion 611 that can protrude from the lock arm 30 when the lock arm 30 is in the attachment and removal control range 23; and a lock guide portion 62 having a guide surface 621 that is formed with an inclination surface which is formed in the lock bar 34 such that its front side position is low and its back side position is high. The lock part 61 has guide shafts 612 formed to protrude in the left/right direction, and any one of the left and right guide shafts 612 is arranged in a long hole 202 formed in the side surface of the lock arm 20 in the up/down direction. Thus, the direction of movement of the lock part 61 is limited to the up/down direction, and the other of the left and right guide shafts 612 makes contact with the guide surface 621 of the lock guide portion 62. Thus, the up/down position of the lock part 61 is controlled by the height of the guide surface 621 in contact with the guide shafts 612. Furthermore, in the arrangement position of the lock part 61 of the lock arm 20, a hole 203 through which the protrusion portion of the lock part 61 can pass is formed, and while the protrusion portion of the lock part 61 is protruding from the lock arm 20, it makes contact with the arm guide 21 (any other constituent member may be used as long as the member is fixed to the base member 14), with the result that the lock arm 20 is prevented from being moved to the extension and contraction control range 22.

Here, with the lock portion 30 of the lock arm 20 in the non-locked position 315 shown in Figs. 7, 12 and 13, the lock bar 34 is in the first lock bar position 345 where the lock bar 34 is moved forward. Hence, the guide shaft 612 of the lock part 61 makes contact with the back side guide surface of the lock guide 612 present in a high position, the protrusion portion 611 of the lock part 61 protrudes upward from the lock arm 20 and thus the lock arm 20 is prevented from being moved in the direction of the extension and contraction control range 22. With the lock portion 30 of the lock arm 20 in the locked position 316 shown in Figs. 8, 14 and 15, the lock bar 20 is in the second lock bar position 346 where the lock bar 20 is moved backward. Hence, the guide shaft of the lock part 61 makes contact with the front side guide surface 621 of the lock guide portion 62 present in a low position, the protrusion portion 611 of the lock part 61 is retained in such a position that the protrusion portion 611 does not protrude upward from the lock arm 20, with the result that the lock arm 20 is allowed to be moved in the direction of the extension and contraction control range 22.

Therefore, when the lock portion 30 of the lock arm 20 of the child seat 10 is locked to the attachment reception portion 4 of the vehicle, as long as the hook 31 of the lock portion 30 is in the non-locked position 315, the lock arm 20 is prevented from being moved to the extension and contraction control range 22 by the contraction lock mechanism 60. Thus, it is possible to reliably lock the lock portion 30 of the lock arm 20 to the attachment reception portion 4 of the vehicle. As an attachment, a dummy attachment reception portion (not shown) is prepared, and when the child seat of the present invention is stored and held, with the lock arm 30 positioned in the attachment and removal control range 23, the dummy attachment reception portion is first locked to the lock portion 30, and thus the contraction lock mechanism 60 is cancelled. Then, with the operation portion 42 operated up to the first stage or the second stage, the lock arm 20 is pushed in the direction in which the base member 14 is stored, and thus it is possible to store the lock arm 20 in a state where the child seat is not fitted to the vehicle.

### Second embodiment

A second embodiment will be described below with reference to accompanying drawings.

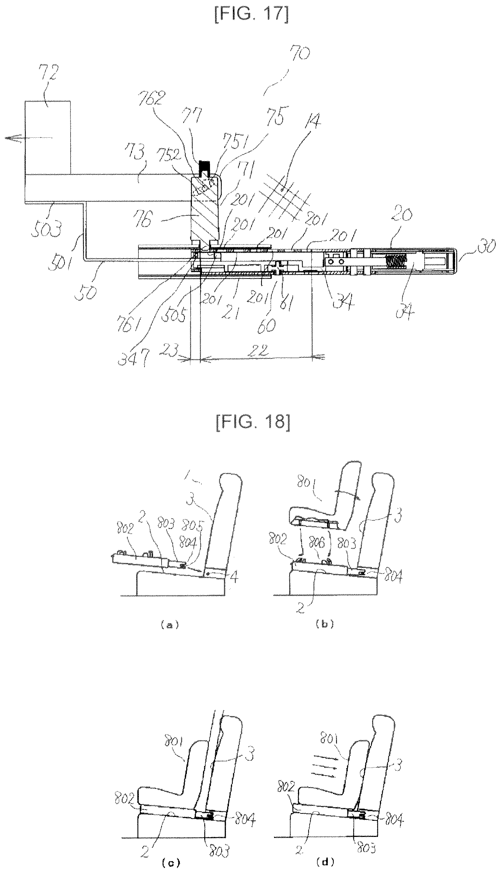

Fig. 1 is a side view showing a form in which the child seat of the present invention is fitted to the seat of the vehicle, Fig. 12 is an enlarged side view of a contraction lock mechanism in a state where the lock portion of the lock arm of the present invention is in the non-locked position, Fig. 13 is an enlarged cross-sectional view of the contraction lock mechanism in the state where the lock portion of the lock arm of the present invention is in the non-locked position, Fig. 14 is an enlarged side view of the contraction lock mechanism in a state where the lock portion of the lock arm of the present invention is in the locked position, Fig. 15 is an enlarged cross-sectional view of the contraction lock mechanism in the state where the lock portion of the lock arm of the present invention is in the locked position, Fig. 16 is a reference horizontal cross-sectional view in which an operation portion of the second embodiment of the present invention is in a non-operated state, and Fig. 17 is a reference horizontal cross-sectional view in which the operation portion of the second embodiment of the present invention is in an operated state (in the middle of an operation).

As shown in Fig. 1, the seat of the vehicle to which the child seat of the present invention can be fitted includes a seat surface 2 and a seat back 3 provided to stand upward from the back portion of the seat surface. In the vicinity of a connection part between the seat surface and the seat back 3, as the child seat coupling anchor of the ISO-FIX system, a pair of left and right attachment reception portions 4 are provided. The attachment reception portions 4 are arranged to cross, in the left/right direction, the vicinity of the connection part between the seat surface 2 and the seat back 3 and are attached to the seat 1.

The child seat 10 includes: a child seat main body 11 formed with a seat surface 12 on which the child sits, a seat member 15 having a restriction belt which restricts the child seated on the seat surface 12 and a base member 14 which is connected to the seat member 15 such that its bottom surface is in contact with the seat surface 2 of the seat 1; a pair of left and right lock arms 20 which protrude backward from the lower portion of the back of the base member 14; and lock portions 30 which are arranged at the top ends of the lock arms 20 so as to be able to engage with the attachment reception portions 4. The seat member 15 and the base member 14 may be integrally configured.

As shown in Figs. 16 and 17, the pair of left and right lock arms 20 are retained within the base member 14 so that they can be moved in the front/back direction by a pair of left and right arm guides 21 arranged in the positions of the bottom portion of the base member 14. Furthermore, within the base member 14, a control mechanism 70 that controls the extension and contraction operation of the pair of left and right lock arms 20 is arranged. The control mechanism 70 includes control mechanism main bodies 71 that are fixed to the pair of left and right arm guides 21, an operation portion 72 that operates the control mechanism 70, control mechanism link members 73 that are moved in the front/back direction by the operation of the operation portion 72, springs (not shown) that apply backward forces to the control mechanism link members 73 and stopper guides 75 that are arranged in the positions of the top ends of the control mechanism link members 73.

On the surface opposite to the control mechanism main body 71 of the lock arm 20, a plurality of opening portions 201 are formed apart in the front/back direction. The control mechanism main body 71 includes a stopper 76 which is configured such that the stopper 76 can move forward and backward with respect to the opening portions 201 (which may be recesses) of the lock arm 20. The stopper 76 receives a force that acts in the direction of the opening portions 201 and that is applied by a spring 77.

The stopper 76 includes a lock portion 761 which is formed such that both its front side position and its back side position can substantially vertically make contact with the opening portion 201 of the lock arm 20.

Furthermore, the stopper 76 includes a guide portion 762 which is formed to protrude in a substantially vertical direction (an up/down direction) relative to the direction in which the stopper 76 moves forward and backward with respect to the opening portions 201. The guide portion 762 is configured so as to make contact with a guide surface 751 formed in the stopper guide 75 arranged in the top end portion of the control mechanism link member 73.

The control mechanism link member 73 to which the backward force is applied by the springs 74 is configured so as to be moved forward by the operation of the operation portion 72. The guide surface that makes contact with the guide portion 762 of the stopper 76 includes a non-operated guide surface 752 in a state where the stopper guide 75 is moved backward by the spring, and a movement guide surface 753 in a state where the stopper guide 75 is moved forward by the operation of the operation portion 72. The control mechanism link member 73 may be configured such that the control mechanism link member 73 receives a forward force applied by the spring and is moved backward by the operation of the operation portion 72.

When the guide surface 751 with which the guide portion 762 of the stopper 76 makes contact is the non-operated guide surface 752, the lock portion 761 of the stopper 76 protrudes from the opening portion 201 of the lock arm 20 by the control mechanism 70, and thus the lock arm 20 is prevented from being moved in the front/back direction with respect to the base member 14.

When the guide surface 751 with which the guide portion 762 of the stopper 76 makes contact by the operation of the operation portion 72 is the movement guide surface 753, the distance from the lock arm 20 is far as compared with the non-operated guide surface 752, and thus both the front and back vertical surfaces of the stopper 76 do not lock the opening portion 201 of the lock arm 20. In this way, the lock arm 20 can be moved in the front/back direction with respect to the base member 14.

When the inclination surfaces are formed at the front and back top end portions of the stopper 76, and the guide surface 751 with which the guide portion 762 of the stopper 76 makes contact is the movement guide surface 753, the inclination surfaces at the front and back top end portions of the stopper 76 may make contact with the opening portion 201 of the lock arm 20. In that case, although the lock arm 20 can be moved in the front/back direction with respect to the base member 14, when the lock arm 20 is moved in the front/back direction, the stopper 76 repeats an forward and backward movement, with the result that it is possible to obtain stepwise feelings of operation at the time of the movement of the lock arm 20 in the front/back direction. In the present invention, the control mechanism 70 that controls the extension and contraction operation of the lock arm 20 is not limited to the present embodiment, and the control mechanism of any existing extension and contraction operation can be utilized.

As in the first embodiment (Figs. 7 and 8), the lock portion 30 arranged at the top end portion of the lock arm 20 in the child seat 10 of the present invention includes a hook 31 where a reception port 311 capable of receiving the attachment reception portion 4 of the vehicle at one end. The hook 31 is rotated by a shaft portion 32 arranged between the left and right side walls of the lock arm 20, and is pivoted such that a non-locked position 315 in a state where the reception port 311 is open backward and a locked position 316 in a state where the reception port 311 is blocked by the lower surface of the lock arm 20 can be switched. A spring 33 arranged around the shaft portion 32 applies, to the hook 31, a force acting in the direction of the non-locked position 315.

Furthermore, the lock portion 30 includes a lock bar 34 arranged within the lock arm 20 in the front/back direction and a spring 35 that applies a backward force to the lock bar 34. The lock bar 34 has a first lock bar position 345 in which in a state where the hook 31 is in the non-locked position 315, a top end portion 341 at the back makes contact with the hook 31.

Furthermore, the lock bar 34 has a second lock bar position 346 in which when the hook 31 is rotated to the locked position, the upper surface 342 of the top end portion engages with a concave lock portion 312 formed in the hook 31 such that the hook 31 is prevented from being rotated in the direction of the non-locked position 315.

When the lock portion 30 arranged at the top end portion of the lock arm 20 and the attachment reception portion 4 are locked together, in a state where the attachment reception portion 4 is arranged within the reception port 311 of the hook 31, the base member 14 (the child seat main body 11) is moved backward by a force greater than the force applied by the spring 33. In this way, the hook 31 is rotated, and thus the concave lock portion 312 formed in the hook 31 is moved to the top end position of the lock bar 34. Consequently, the back top end portion 341 of the lock bar 34 that is moved backward by receiving the backward force applied by the spring 35 is moved within the concave lock portion 312 formed in the hook 31, the upper surface 342 of the top end portion of the lock bar 34 engages with the jaw portion 313 of the concave lock portion 312 and thus it is possible to maintain the state where the lock portion 30 and the attachment reception portion 4 are locked together.

In the present embodiment, as shown in Figs. 16 to 17, a pair of left and right lock cancellation link members 50 arranged in the front/back direction are provided. The back part of the lock cancellation link member 50 is arranged within the lock arm 20. At the front portion, a bend arm portion 501 that is bent substantially vertically in the left/right direction and a top end portion 503 that is bent substantially vertically in the forward direction of the bend arm portion 501 are formed. The top end portion 503 is fixed to the control mechanism link members 73.

When the operation portion 72 is operated, the lock cancellation link member 50 is moved in the forward direction as the control mechanism link member 73 is moved forward. The operation structure of the lock cancellation link member 50 may be configured as in the first embodiment or another existing configuration may be utilized.

In this configuration, as in the first embodiment, the extension and contraction position of the lock arm 20 includes: an extension and contraction control range 22 which is set as a range of use in a state where the child seat is fitted to the vehicle and in which the stopper 46 can lock a plurality of opening portions 201 in the lock arm 20; and an attachment and removal control range 23 which is in a position where the lock arm 20 extends from the base member 14 as compared with the extension and contraction control range 22 set for attaching to and removing from the lock portion 30 with respect to the attachment reception portion 4 of the vehicle (see Fig. 9 in the first embodiment).

As in the first embodiment (Figs. 10 and 11), at the back portion of the lock cancellation link member 50 and the front portion of the lock bar 34, engagement portions 505 and 347 are formed, respectively. When the lock arm 20 is in the attachment and removal control range 23, the movement operation is performed on the operation portion 72 (in Figs. 10 and 11, the operation portion 51), thus the lock cancellation link member 50 is moved in the forward direction with respect to the base member 14, the engagement portion 505 of the lock cancellation link member 50 and the engagement portion 347 of the lock bar 34 are engaged with each other, with the result that the lock bar 34 is moved forward. The lock bar 34 is moved up to the second lock bar position 346 or is moved in the forward direction as compared with the second lock bar position 346, and thus the state of the engagement between the upper surface 342 of the top end portion of the lock bar 34 and the concave lock portion 312 of the hook 31 is canceled. The hook 31 of the lock portion 30 is rotated to the non-locked position 315 by a force applied by the spring 33 and the state of the locking of the lock portion 30 and the attachment reception portion 4 is cancelled.

When the lock arm 20 is in the extension and contraction control range 22, the movement operation is performed on the operation portion 72 (in Figs. 10 and 11, the operation portion 51). Thus, even when the lock cancellation link member 50 is moved in the forward direction with respect to the base member 14, the engagement portion 505 of the lock cancellation link member 50 and the engagement portion 347 of the lock bar 34 are not engaged and are kept separated. Hence, it is impossible to move the lock bar 34 forward, and thus it is impossible to cancel the state of the locking of the lock portion 30 and the attachment reception portion 4.

Therefore, when the engagement of the lock portion 30 with the attachment reception portion 4 is cancelled from the state where the child seat 10 is fitted to the vehicle, with the base member 14 in contact with the seat surface 2 of the seat 1 in the vehicle connected to the seat member 15 having a part of the seat surface 12 on which the child sits, as the first operation, the movement operation is performed on the operation portion 72 shown in Figs. 16 and 17. This allows the movement of the lock arm 20 in the front/back direction with respect to the base member 14. Then, as the second operation, with the first operation maintained, the child seat main body 11 (the base member 14) is moved forward. Thus, the extension and contraction position of the lock arm 20 with respect to the base member 14 is moved up to the attachment and removal control range 23. Thus, the engagement portion 505 of the lock cancellation link member 50 and the engagement portion 347 of the lock bar 34 are engaged. Furthermore, the child seat main body 11 (the base member 14) is moved forward, and thus the lock bar 34 is brought into the second lock bar position 346 where the lock bar 34 is moved forward. The state of the engagement between the upper surface 342 of the top end portion of the lock bar 34 and the concave lock portion 312 of the hook 31 is cancelled, and thus the hook 31 of the lock portion 30 is rotated to the non-locked position 315 by the force applied by the spring 33, and the state of the locking of the lock portion 30 and the attachment reception portion 4 is cancelled. In the child seat where the base member 14 and the seat member 15 can be separated, a configuration may be adopted in which with the seat member 15 separated from the base member 14, it is possible to perform an operation of cancelling the engagement of the lock portion 30 with the attachment reception portion 4.

In the present invention, as a means that cancels the engagement of the lock portion with the attachment reception portion from the state where the child seat is fitted to the vehicle, as described above, unless a plurality of operations consisting of the first operation and the second operation are performed, it is impossible to remove the child seat from the attachment reception portion of the vehicle. Hence, it is possible to prevent the child seat from being removed from the vehicle without the intension of a guardian resulting from an operation performed by the child restricted on the child seat.

Furthermore, the operation described above includes an operation of moving the child seat main body 11 (the base member 14) forward. Hence, with the child sitting on the child seat 10, the weight of the child increases the friction resistance between the bottom surface of the child seat 10 and the seat surface 2 of the seat 1 in the vehicle, and thus it becomes difficult to perform the operation. Consequently, it is possible to prevent the child seat 10 from being removed from the vehicle resulting from an erroneous operation performed by an operator other than the child sitting on the child seat 10.

Furthermore, as in the first embodiment and shown in Figs. 7, 8 and 12 to 15, the child seat 10 of the present invention includes a contraction lock mechanism 60 that is operated as the engagement of the lock portion 30 with the attachment reception portion 4 is cancelled. When the contraction lock mechanism 60 is operated, the contraction lock mechanism 60 prevents the movement of the lock arm 20 to the extension and contraction control range 22 with respect to the child seat main body 10. The contraction lock mechanism 60 is cancelled by the engagement of the lock portion 30 with the attachment reception portion 4. Hence, in the lock portion 30 of the lock arm 20, with the hook 31 in the non-locked position 315, the lock arm 20 is constantly in the attachment and removal control range 23.

The contraction lock mechanism 60 includes: a lock part 61 having a protrusion portion 611 that can protrude from the lock arm 30 when the lock arm 30 is in the attachment and removal control range 23; and a lock guide portion 62 having a guide surface 621 that is formed with an inclination surface which is formed in the lock bar 34 such that its front side position is low and its back side position is high. The lock part 61 has guide shafts 612 formed to protrude in the left/right direction. Any one of the left and right guide shafts 612 is arranged in a long hole 202 formed in the side surface of the lock arm 20 in the up/down direction, and thus the direction of movement of the lock part 61 is limited to the up/down direction. The other of the left and right guide shafts 612 makes contact with the guide surface 621 of the lock guide portion 62, and thus the up/down position of the lock part 61 is controlled by the height of the guide surface 621 in contact with the guide shafts 612. Furthermore, in the arrangement position of the lock part 61 of the lock arm 20, a hole 203 through which the protrusion portion of the lock part 61 can pass is formed, and while the protrusion portion of the lock part 61 is protruding from the lock arm 20, it makes contact with the arm guide 21 (any other constituent member may be used as long as the member is fixed to the base member 14), with the result that the lock arm 20 is prevented from being moved to the extension and contraction control range 22.

Here, with the lock portion 30 of the lock arm 20 in the non-locked position 315, the lock bar 34 is in the first lock bar position 345 where the lock bar 34 is moved forward. Hence, the guide shaft 612 of the lock part 61 makes contact with the back side guide surface of the lock guide 612 present in a high position, the protrusion portion 611 of the lock part 61 protrudes upward from the lock arm 20 and thus the lock arm 20 is prevented from being moved in the direction of the extension and contraction control range 22. With the lock portion 30 of the lock arm 20 in the locked position 316, the lock bar 20 is in the second lock bar position 346 where the lock bar 20 is moved backward. Hence, the guide shaft of the lock part 61 makes contact with the front side guide surface 621 of the lock guide portion 62 present in a low position, the protrusion portion 611 of the lock part 61 is retained in such a position that the protrusion portion 611 does not protrude upward from the lock arm 20, with the result that the lock arm 20 is allowed to be moved in the direction of the extension and contraction control range 22.

Therefore, when the lock portion 30 of the lock arm 20 of the child seat 10 is locked to the attachment reception portion 4 of the vehicle, as long as the hook 31 of the lock portion 30 is in the non-locked position 315, the lock arm 20 is prevented from being moved to the extension and contraction control range 22 by the contraction lock mechanism 60. Thus, it is possible to reliably lock the lock portion 30 of the lock arm 20 to the attachment reception portion 4 of the vehicle. As an attachment, a dummy attachment reception portion (not shown) is prepared, and when the child seat of the present invention is stored and held, with the lock arm 30 positioned in the attachment and removal control range 23, the dummy attachment reception portion is first locked to the lock portion 30, and thus the contraction lock mechanism 60 is cancelled. Then, with the operation portion 72 operated, the lock arm 20 is pushed in the direction in which the base member 14 is stored, and thus it is possible to store the lock arm 20 in a state where the child seat is not fitted to the vehicle.

### Industrial Applicability

The child seat of the present invention can be effectively utilized as a structure for fixing a child seat to a seat of a vehicle which has the fixing structure of the ISO-FIX system.

### List of Reference Symbols

1: seat, 2: seat surface, 3: seat back, 4: attachment reception portion, 10: child seat, 11: child seat main body, 12: seat surface, 14: base member, 15: seat member, 20: lock arm, 21: arm guide, 22: extension and contraction control range, 23: attachment and removal control range, 30: lock portion, 31: hook, 32: shaft portion, 33: spring, 34: lock bar, 35: spring, 40: control mechanism, 41: control mechanism main body, 42: operation portion, 43: control mechanism link member, 44: spring, 45: stopper guide, 46: stopper, 47: spring, 50: lock cancellation link member, 51: adapter, 52: spring, 53: locating rib, 60: contraction lock mechanism, 61: lock part, 62: lock guide portion, 70: control mechanism, 71: control mechanism main body, 72: operation portion, 73: control mechanism link member, 75: stopper guide, 76: stopper, 77: spring, 201: opening portion, 202: long hole, 203: hole, 311: reception port, 312: concave lock portion, 313: jaw portion, 315: non-locked position, 316: locked position, 341: top end portion at the back, 342: upper surface, 345: first lock bar position, 346: second lock bar position, 347: engagement portion, 452: non-operated guide surface, 453: first movement guide surface, 454: second movement guide surface, 461: top end lock portion, 462: second lock portion, 463: inclination surface, 465: guide portion, 752: non-operated guide surface, 753: movement guide surface, 761: lock portion, 762: guide portion, 501: bend arm portion, 502: hole, 503: top end portion, 504: long hole, 505: engagement portion, 511: fixing portion, 512: first arm portion, 513: spring reception portion, 514: second arm portion, 515: jaw portion, 516: third arm portion, 517: pin-shaped protrusion, 611: protrusion portion, 612: guide shaft, 621: guide surface, 801: seat member, 802: base member, 803: lock arm, 804: lock portion, 805: hook, 806: cancellation lever, 807: movable plate

## Claims

1. A child seat (10) which includes a seat surface (2), a seat back (3) provided to stand upward from a back portion of the seat surface (2) and an attachment reception portion (4) provided in a vicinity of a connection part between the seat surface (2) and the seat back (3), which is attached to a seat (1) of a vehicle and on which a child sits, the child seat (10) comprising:
a child seat main body (11);
a pair of left and right lock arms (20) which protrude backward from a lower portion of a back of the child seat main body (11); and
a lock portion (30) which is arranged at a top end of the lock arm (20),
wherein with the child seat (10) fitted to the vehicle, the lock portions (30) of the pair of left and right lock arms (20) are engaged with the attachment reception portions (4), respectively,
the child seat (10) further comprises: a lock cancellation mechanism (34, 50) which cancels the engagement of the lock portion (30) with the attachment reception portion (4); a control mechanism (40, 70) which controls an extension and contraction operation of the lock arm (20) on the child seat main body (11); and an operation portion (42, 72) which operates the control mechanism (40, 70) and
an extension and contraction position of the lock arm (20) includes: an extension and contraction control range (22) which is a range of use in a state where the child seat (10) is fitted to the vehicle; and an attachment and removal control range (23) which is in a position where the lock arm (20) extends from the child seat main body (11) as compared with the extension and contraction control range (22) set for attaching to and removing from the lock portion (30) with respect to the attachment reception portion (4) of the vehicle,
wherein the lock cancellation mechanism (34, 50) can be operated only when the extension and contraction position of the lock arm (20) is in the attachment and removal control range (23),
wherein a means which cancels the engagement of the lock portion (30) with the attachment reception portion (4) from the state where the child seat (10) is fitted to the vehicle is configured such that the means can be performed with a plurality of operation means in a state where a seat surface part (12) on which the child sits is not separated,
wherein the means which cancels the engagement of the lock portions (30) with the attachment reception portion (4) from the state where the child seat (10) is fitted to the vehicle includes: a first operation means which cancels, with an operation of the operation portion (42, 72), the control of the extension and contraction operation of the lock arm (20) by the control mechanism (40, 70); and a second operation means which moves the child seat main body (11) forward in a state where the operation of the operation portion (42, 72) is used to cancel the extension and contraction operation of the lock arm (20) such that the extension and contraction position of the lock arm (20) with respect to the child seat main body (11) is moved from the extension and contraction control range (22) to the attachment and removal control range (23), and
with the extension and contraction position of the lock arm (20) in the attachment and removal control range (23), the operation portion (42, 72) is operated such that the lock cancellation mechanism is operated.

2. The child seat of claim 1,
wherein the child seat includes a contraction lock mechanism (60) which is operated as the engagement of the lock portion (30) with the attachment reception portion (4) is cancelled,
the contraction lock mechanism (60) prevents, when the contraction lock mechanism (60) is operated, a movement of the lock arm (20) to the extension and contraction control range (22) with respect to the child seat main body (11) and
the contraction lock mechanism (60) is cancelled by the engagement of the lock portion (30) with the attachment reception portion (4).

## Patentansprüche

1. Ein Kindersitz (10), der eine Sitzfläche (2), eine Rückenlehne (3), die vorgesehen ist um von einem Rückenabschnitt der Sitzfläche (2) nach oben zu stehen, und einen Befestigungsaufnahmeabschnitt (4) umfasst, der in einer Umgebung von einem Verbindungsteil zwischen der Sitzfläche (2) und der Rückenlehne (3) vorgesehen ist, der an einem Sitz (1) eines Fahrzeugs angebracht ist und auf dem ein Kind sitzt, wobei der Kindersitz (10) umfasst:
einen Kindersitz-Hauptkörper (11);
ein Paar von linken und rechten Verriegelungsarmen (20), die von einem unteren Abschnitt einer Rückseite des Kindersitz-Hauptkörpers (11) nach hinten vorstehen; und
ein Verriegelungsabschnitt (30), der an einem oberen Ende des Verriegelungsarms (20) angeordnet ist,
wobei, wenn der Kindersitz (10) an dem Fahrzeug angebracht ist, die Verriegelungsabschnitte (30) des Paares von linken und rechten Verriegelungsarmen (20) jeweils mit den Befestigungsaufnahmeabschnitten (4) in Eingriff sind,
der Kindersitz (10) umfasst ferner: einen Verriegelungsaufhebungsmechanismus (34, 50), der den Eingriff des Verriegelungsabschnitts (30) mit dem Befestigungsaufnahmeabschnitt (4) aufhebt; einen Steuermechanismus (40, 70), der einen Ausfahr- und Zusammenziehvorgang des Verriegelungsarms (20) an dem Kindersitz-Hauptkörper (11) steuert; und einen Betätigungsabschnitt (42, 72), der den Steuermechanismus (40, 70) betreibt und
eine Ausfahr- und Zusammenziehposition des Verriegelungsarms (20) umfassend:
einen Ausfahr- und Zusammenziehsteuerbereich (22), der ein Bereich in einem Zustand der Verwendung ist, in dem der Kindersitz (10) an dem Fahrzeug angebracht ist; und einen Anbringungs- und Wegnahmesteuerbereich (23), der sich in einer Position befindet, in der sich der Verriegelungsarm (20) von dem Kindersitz-Hauptkörper (11), im Vergleich mit dem Ausfahr- und Zusammenziehsteuerbereich (22), zum Anbringen und Entfernen von dem Verriegelungsabschnitt (30) in Bezug auf den Befestigungsaufnahmeabschnitt (4) des Fahrzeugs, erstreckt,
wobei der Verriegelungsaufhebungsmechanismus (34, 50) nur dann betätigt werden kann, wenn sich die Ausfahr- und Zusammenziehposition des Verriegelungsarms (20) in dem Anbringungs- und Wegnahmesteuerbereich (23) befindet,
wobei eine Vorrichtung, die den Eingriff des Verriegelungsabschnitts (30) mit dem Befestigungsaufnahmeabschnitt (4) aus dem Zustand aufhebt, in dem der Kindersitz (10) an dem Fahrzeug angebracht ist, und so konfiguriert ist, dass die Vorrichtung mit einer Mehrzahl von Betriebsmittel in einem Zustand ausgeführt werden kann, in dem ein Sitzflächenteil (12), auf dem das Kind sitzt, nicht getrennt ist,
wobei die Vorrichtung, die den Eingriff der Verriegelungsabschnitte (30) mit dem Befestigungsaufnahmeabschnitt (4) aus dem Zustand aufhebt, in dem der Kindersitz (10) an dem Fahrzeug angebracht ist, umfasst: eine erste Betätigungsvorrichtung, die mit einer Betätigung des Betätigungsabschnitts (42, 72), die Steuerung des Ausfahr- und Zusammenziehvorgang des Verriegelungsarms (20) durch den Steuermechanismus (40, 70) aufhebt; und eine zweite Betätigungsvorrichtung, die den Kindersitz-Hauptkörper (11) in einem Zustand vorwärts bewegt, in dem die Betätigung des Betätigungsabschnitts (42, 72) dazu verwendet wird, den Ausfahr- und Zusammenziehvorgang des Verriegelungsarms (20) aufzuheben, so dass die Ausfahr- und Zusammenziehposition des Verriegelungsarms (20), in Bezug auf den Kindersitz-Hauptkörper (11), von dem Ausfahr- und Zusammenziehsteuerbereich (22) zu dem Anbringungs- und Wegnahmesteuerbereich (23) bewegt wird, und
mit der Ausfahr- und Zusammenziehposition des Verriegelungsarms (20) in dem Anbringungs- und Wegnahmesteuerbereich (23) wird der Betätigungsabschnitt (42, 72) betrieben, so dass der Verriegelungsaufhebungsmechanismus betätigt wird.

2. Der Kindersitz nach Anspruch 1,
wobei der Kindersitz einen Zusammenziehsperrmechanismus (60) umfasst, der betätigt wird, wenn der Eingriff des Verriegelungsabschnitts (30) mit dem Anbringungsaufnahmeabschnitt (4) aufgehoben wird,
der Zusammenziehsperrmechanismus (60) verhindert, wenn der Zusammenziehsperrmechanismus (60) betätigt ist, eine Bewegung des Verriegelungsarms (20) zu dem Ausfahr- und Zusammenziehsteuerbereich (22) in Bezug auf den Kindersitzhauptkörper (11) und
der Zusammenziehsperrmechanismus (60) wird durch den Eingriff des Verriegelungsabschnitts (30) mit dem Befestigungsaufnahmeabschnitt (4) aufgehoben.

## Revendications

1. Siège pour enfant (10) comprenant une surface de siège (2), un dossier (3) prévu pour se relever d'une partie arrière de la surface de siège (2) et une partie de réception de fixation (4) située à proximité d'une pièce de connexion entre la surface de siège (2) et le dossier (3), qui est fixée à un siège (1) d'un véhicule et sur laquelle est assis un enfant, le siège pour enfant (10) comprenant:
un corps principal de siège pour enfant (11);
une paire de bras de verrouillage gauche et droit (20) faisant saillie vers l'arrière depuis une partie inférieure d'un dos du corps principal de siège pour enfant (11); et
une partie de verrouillage (30) qui est disposée à une extrémité supérieure du bras de verrouillage (20),
dans lequel, avec le siège pour enfant (10) monté sur le véhicule, les parties de verrouillage (30) de la paire de bras de verrouillage gauche et droit (20) sont engagées dans les parties de réception de fixation (4), respectivement,
le siège pour enfant (10) comprend en outre: un mécanisme d'annulation de verrouillage (34, 50) qui annule l'engagement de la partie de verrouillage (30) avec la partie de réception de fixation (4); un mécanisme de commande (40, 70) qui commande une opération d'extension et de contraction du bras de verrouillage (20) sur le corps principal du siège pour enfant (11); et une partie d'actionnement (42, 72) qui actionne le mécanisme de commande (40, 70) et
une position d'extension et de contraction du bras de verrouillage (20) comprend:
une plage de commande d'extension et de contraction (22) qui est une plage d'utilisation dans un état où le siège pour enfant (10) est monté sur le véhicule; et
une plage de commande de fixation et de retrait (23) qui est dans une position où le bras de verrouillage (20) s'étend depuis le corps principal de siège pour enfant (11) par rapport à la plage de commande d'extension et de contraction (22) pour assurer la fixation et le retrait depuis la partie de verrouillage (30) par rapport à la partie de réception de fixation (4) du véhicule,
dans lequel le mécanisme d'annulation de verrouillage (34, 50) peut être actionné uniquement lorsque la position d'extension et de contraction du bras de verrouillage (20) se trouve dans la plage de commande de fixation et de retrait (23),
dans lequel un moyen qui annule l'engagement de la partie de verrouillage (30) avec la partie de réception de fixation (4) depuis l'état où le siège pour enfant (10) est monté sur le véhicule est configuré de sorte que le moyen peut être constitué d'une pluralité de des moyens d'actionnement dans un état où une partie de surface de siège (12), sur laquelle l'enfant est assis, n'est pas séparée,
dans lequel le moyen qui annule l'engagement des parties de verrouillage (30) avec la partie de réception de fixation (4) depuis l'état où le siège d'enfant (10) est monté sur le véhicule, comprend: un premier moyen d'actionnement qui annule, avec une opération de la partie d'actionnement (42, 72), la commande de l'opération d'extension et de contraction du bras de verrouillage (20) par le mécanisme de commande (40, 70); et un second moyen d'actionnement qui déplace le corps principal de siège pour enfant (11) vers l'avant dans un état où le fonctionnement de la partie d'actionnement (42, 72) permet d'annuler l'extension et l'opération de contraction du bras de verrouillage (20) de telle sorte que la position d'extension et de contraction du bras de verrouillage (20) par rapport au corps principal de siège pour enfant (11) est déplacée depuis la plage de commande d'extension et de contraction (22) vers la plage de commande de fixation et de retrait (23), et
avec la position d'extension et de contraction du bras de verrouillage (20) dans la plage de commande de fixation et de retrait (23), la partie d'actionnement (42, 72) est actionnée de telle sorte que le mécanisme d'annulation de verrouillage est actionné.

2. Siège pour enfant selon la revendication 1,
dans lequel le siège pour enfant comprend un mécanisme de verrouillage de contraction (60) qui fonctionne lorsque l'engagement de la partie de verrouillage (30) avec la partie de réception de fixation (4) est annulé,
le mécanisme de verrouillage de contraction (60) empêche, lorsque le mécanisme de verrouillage de contraction (60) est actionné, un mouvement du bras de verrouillage (20) vers la plage de commande d'extension et de contraction (22) par rapport au corps principal de siège pour enfant (11) et
le mécanisme de verrouillage de contraction (60) est annulé par l'engagement de la partie de verrouillage (30) avec la partie de réception de fixation (4).
